# EUROPEAN PATENT APPLICATION

(11) **EP 4 530 949 A1**
(43) Date of publication of application: **02.04.2025**
(21) Application number: 24197930.1
(22) Date of filing: 02.09.2024
(51) Int. Cl.: G06Q 10/0635, G06Q 10/20, G05B 23/02, G06Q 50/04

(54) **RISK EVALUATION FOR EQUIPMENTS**

(30) Priority: 27.09.2023 IN 202311064910
(71) Applicant: Honeywell International Inc., Charlotte, NC 28202 (US)
(72) Inventor: KAR, Chinmaya, Charlotte, 28202 (US); DANI, Minal Nitin, Charlotte, 28202 (US); SRIVASTAVA, Viraj, Charlotte, 28202 (US)
(74) Representative: Haseltine Lake Kempner LLP

(57) **Abstract**

Techniques for risk management in a supply chain are described. In one aspect, to determine an overall impact of a fault associated with an equipment operating in a facility, multiple operational parameters of the equipment are monitored to detect an anomaly, based on which a fault in the equipment is identified. On identifying the fault, a first impact factor corresponding to an energy impact, a second impact factor corresponding to an emission impact, and a third impact factor corresponding to an economic impact are derived based on the multiple operational parameters. Further, an integrated risk indicator is computed from the impact factors to determine a current overall impact of the fault on the equipment. Accordingly, a risk profile including one or more remedial strategies is generated based on the integrated risk indicator and is issued to personnel of the facility for risk management.

## Description

### TECHNICAL FIELD

The present subject matter relates, in general, to risk management in a facility, and in particular, to risk evaluation for equipments in a facility.

### BACKGROUND

Generally, in facilities such as an industrial plant, risk management plays an integral role in assessing appropriate responses to faults or failures of equipment, aiming to mitigate their consequences. During the lifecycle of the equipment, from installation to disposal, multiple factors such as wear and tear, environmental factors, operational stresses, faults, and the like, potentially increase the equipment's susceptibility to malfunctioning, failure, or breakdown. Effective risk management in facilities involves analyzing potential impacts of equipment failures at their onset to ensure effective mitigation of unexpected downtimes, production losses, and associated costs.

### SUMMARY

Aspects of the present subject matter provide techniques for evaluating a risk of a fault associated with an equipment operating in a facility.

According to an example of the present subject matter, a method to determine an overall impact of a fault associated with an equipment operating in a facility is provided. The method includes monitoring one or more operational parameters of the equipment obtained through one or more sensors coupled to the equipment to detect an anomaly. The anomaly being indicative of a deviation of an operational parameter from a first operating range corresponding the operational parameter. Further, the method includes identifying, by the risk evaluating system, a fault in the equipment operating in the facility in correspondence to the detected anomaly. On identifying the fault, the method includes deriving, by the risk evaluating system, at least one of a first impact factor corresponding to an energy impact, a second impact factor corresponding to an emission impact, and a third impact factor corresponding to an economic impact based on the one or more operational parameters. On deriving the first impact factor, the second impact factor, and the third impact factor, the method includes computing, by the risk evaluating system, an integrated risk indicator from at least one of the first impact factor, the second impact factor, and the third impact factor to determine a measure of a current overall impact of the fault on the equipment. Furthermore, the method includes generating, by the risk evaluating system, a risk profile based on the integrated risk factor for the equipment, where the risk profile includes one or more remedial strategies to be executed and issuing the risk profile to personnel of the facility for risk management.

According to another example of the present subject matter, a system to determine an overall impact of a fault associated with an equipment operating in a facility is provided. The system includes an assessment module and a risk evaluating module. The assessment module is to monitor one or more operational parameters of the equipment obtained through one or more sensors coupled to the equipment to detect an anomaly, where the anomaly indicates a deviation of an operational parameter from a first operating range corresponding to the operational parameter and identify a fault in the equipment operating in the facility in correspondence to the detected anomaly. The risk evaluating module is to predict, on identifying the fault, at least one of a first impact factor corresponding to an energy impact, a second impact factor corresponding to an emission impact, and a third impact factor corresponding to an economic impact for a pre-determined time period based on the one or more operational parameters. Further, an integrated risk indicator is computed from at least one of the first impact factor, the second impact factor, and the third impact factor to determine a measure of an overall impact of the fault on the equipment for the pre-determined time period. On computing the integrated risk indicator, a risk profile based on the integrated risk factor for the equipment is generated, where the risk profile includes one or more remedial strategies to be executed and is issued to personnel of the facility for risk management.

According to another example of the present subject matter, a non-transitory computer readable medium containing program instruction is provided, that, when executed, causes the processor to monitor one or more operational parameters associated with the fault through one or more sensors coupled to the equipment to detect an anomaly, where the anomaly indicates a deviation of the one or more operational parameters from a first operating range corresponding to the one or more operational parameters, determine an integrated risk indicator corresponding to at least one of an energy impact, an emission impact, and an economic impact in correspondence to the anomaly detected, generate a risk profile for the equipment including at least one remedial strategy, where the at least one remedial strategy is to mitigate an impact associated with the fault and execute one remedial strategy from amongst the at least one remedial strategy for risk management.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.
Fig. 1 illustrates a supply chain network environment, in accordance with an example implementation of the present subject matter.
Fig. 2 illustrates an example supply chain network, in accordance with an example implementation of the present subject matter.
Fig. 3 illustrates a risk evaluating system, in accordance with an example implementation of the present subject matter.
Fig. 4 illustrates an example of risk management in an industrial plant, in accordance with an example implementation of the present subject matter.
Fig. 5 illustrates another example of risk management, in accordance with an example implementation of the present subject matter.
Fig. 6 illustrates an example method for determining an impact of a fault in an equipment, in accordance with an example implementation of the present subject matter.
Fig. 7 illustrates an example method for a break-even analysis associated with a fault in an equipment, in accordance with an example implementation of the present subject matter.
Fig. 8 illustrates an example method to determine an overall impact of a fault on an equipment operating in the facility, in accordance with an example implementation of the present subject matter.
Fig. 9 illustrates another example method for determining an impact of a fault in an equipment operating in the facility, in accordance with an example implementation of the present subject matter.
Fig. 10 illustrates a non-transitory computer-readable medium for determining an overall impact of a fault associated with an equipment operating in a facility, in accordance with an example of the present subject matter.

### DETAILED DESCRIPTION

The present subj ect matter relates to techniques of determining an overall impact of a fault associated with an equipment operating in a facility. Generally, a supply chain encompasses a network of facilities including plants, warehouses, distribution centers, logistic hubs, and the like, that collectively work to produce and deliver products and services to end consumers. These facilities often house various assets, such as equipments, that are integral to their operations and productivity. During the operational lifetime of these equipments, the equipments may experience various faults or failures, which may impact the production capabilities of the equipment, as well as the facility.

Faults and failures generally cause disruptions which can range from minor inefficiencies to complete production stoppages, depending on the severity of the fault and criticality of the affected equipment within the production process. For example, in a facility housing a single production line, the occurrence of a fault in an integral equipment of the production line may lead to a complete production stoppage in the facility. Therefore, even a localized equipment failure in one facility of the supply chain can have far-reaching consequences, potentially halting the entire production process and impacting the facility's overall output and efficiency. Moreover, assessing an impact of a fault incident on an equipment is important to analyze a risk associated with the fault on the equipment, as well as the facility, to enable efficient risk management of the supply chain.

Typically, on the occurrence of a fault, a fault alert is provided, where the fault alert may also be indicative of a severity value associated with the fault. The severity of the fault is generally computed based on techniques such as Failure Mode Effect Analysis (FMEA) or Reliability Centered Maintenance (RCM) performed for the equipment. In such techniques, the severity of the fault is determined either based on comparison of a current fault with historical data associated with similar faults that have occurred in the past on the same or similar equipments or based on past experiences of subject matter experts. However, the severity value computed from such a technique is static in nature and does not consider the dynamic nature of an equipments behavior if the fault persists. Often, when a fault is left unattended, the fault persisting in an equipment poses adverse threats to not only the multiple subsystems of the equipment, but also other interconnected equipments. For example, when a primary damage associated with a fault is not resolved on priority, there is a possibility that it gradually leads to a secondary damage, which could involve higher risks and more severe consequences. For example, if high lubricating oil header temperatures of a lubrication subsystem of a compressor are not resolved, the viscosity of the lubricating oil may decrease, which leads to increased friction in the radial and thrust bearings. If an appropriate maintenance action is not carried out by this point of time, the existing damage may further create a large clearance in the bearing leading to rattling of rotor that may further damage the seals of the compressor. Thus, resulting in catastrophic damage to the compressor.

Generally, to address a fault, a load on the affected equipment may be reduced or the affected equipment may be completely shut down for maintenance, repair, or replacement. These actions are typically taken as a reactive measure to mitigate an immediate consequence of the fault. However, implementing such measures reactively without assessing their impact may have unintended negative effects on the overall productivity of the facility, resulting in an increase in the costs associated with such an action.

Traditional approaches of risk management rely on strategizing mitigation of the fault based on manual calculations, where aspects associated with an impact of the impending fault are manually calculated. Such manual analysis is typically based on principles of Reliability Centered Maintenance (RCM) analysis for determining the consequence of any failure mode, or root cause analysis based on past data, or the actual maintenance costs incurred for similar faults in the past. This approach is not only time-consuming, but is also cumbersome and is prone to errors, resulting in inaccurate assessment of the risk associated with the equipment as well as the facility. Also, analyzing the impact of the fault is highly dependent on manual intervention and is not dynamically determined based on factors that affect the equipment on persistence of the fault, and on how the fault will continue to impact the equipment as well as the facility if the fault remains unresolved for a certain period of time. Further, at any point of time, the computed impact of the fault may be outdated which may lead to making uninformed decisions such as selecting a mitigative action without considering the overall, current impact of the fault.

When a fault persists in the equipment, several simultaneous faults may occur in other sub-systems or components of the same equipment, or other equipments connected to the equipment associated with the fault. Each of these individual faults or simultaneous faults may have different consequences on the equipment or the facility. Assessing the risk associated with the equipment or the facility by considering an impact associated with each of these subsequent faults on every equipment affected and also prioritizing the order in which the faults need to be resolved, is unduly challenging with the manual analyzing techniques. The lack of a comprehensive assessment associated with the simultaneous faults impedes prioritizing the equipment requiring immediate attention, especially in a scenario where multiple fault alerts associated with multiple pieces of equipment are issued simultaneously. Consequently, being unaware of the cascading effects of the fault alerts in real-time and lacking prioritization of the impact associated with each fault makes it difficult to ascertain the overall impact of the fault, potentially leading to suboptimal decision-making in risk management and resolution.

According to examples of the present subject matter, techniques to determine an overall impact of a fault associated with an equipment operating in a facility, such as an industrial plant, is provided. Techniques of the present subject matter identify a fault incident on the equipment operating in the facility and obtain one or more operational parameters associated with the fault. In one example, the one or more operational parameters may be obtained in real-time from the affected equipment through one or more sensors coupled to the equipment. The operational parameters may then be monitored to detect an anomaly. The anomaly being indicative of a deviation in the one or more operational parameters from a first operating range corresponding to the one or more operational parameters. For example, in an equipment such as an industrial steam turbine, temperature sensors may continuously monitor the temperature values of various sub-systems or components of the turbine on the occurrence of the fault. In one example, it may be observed that the bearing temperature has risen to 90 degrees C which may exceed the normal operating range of 60-85 degrees C. This deviation in the temperature from the normal operating range may be detected as an anomaly in the bearings or lubricating oil systems with higher header temperatures.

On detecting the anomaly, at least one of a first impact factor corresponding to an energy impact, a second impact factor corresponding to an emission impact, and a third impact factor corresponding to an economic impact may be derived. In one example, the first impact factor, the second impact factor, and the third impact factor may be derived based on any one of a type of fault incident on the equipment, one or more or operational parameters associated with the fault, and historical data associated with the fault in real time. In another example, the first impact factor, the second impact factor, and the third impact factor may be predicted for a pre-determined time period. For example, the first impact factor, the second impact factor, and the third impact factor may be predicted for the next 72 hours, and the like. In one example, the first impact factor, the second impact factor, and the third impact factor may be determined based data fusion techniques such as fuzzy logic, Dempster Shafer technique, or Bayesian belief network, and the like.

Further, an integrated risk indicator from at least one of the first impact factor, the second impact factor, and the third impact factor may be computed to determine a measure of a current overall impact of the fault on the equipment. In one example, the integrated risk indicator may be computed at pre-determined time intervals, for example, every 1 hour. In one example, the integrated risk indicator may be determined for several equipments operating in the facility and a priority index may be assigned to the one or more equipments operating in the facility in correspondence to a value of the integrated risk indicator determined for each equipment of the one or more equipments operating in the facility.

When a fault in an equipment is left unattended, the persisting fault may further lead to subsequent damages either within the said equipment, or other equipments coupled to it. To assess an overall impact of the fault if the fault is left unattended, techniques of the present subject matter determine one or more failure stages associated with the fault incident on the equipment, where each failure stage of the one or more failure stages is indicative of a cascading impact of the fault on the equipment and other equipment of the facility. In one example, a first failure stage associated with the fault and a progression of the subsequent damages that may occur may be computed of the risk evaluation. For example, a fault in the lube oil subsystem of an equipment may subsequently lead to a bearing subsystem fault, which may further result in a seal subsystem fault, and the like. Further, a cost associated with resolving each of these faults and a time duration associated with resolving each of these faults may be computed. For example, resolving the fault in the lube oil system may cost about USD 10,000 and may take up to 4 hours of time to be resolved. Similarly, resolving the fault in the bearing subsystem may cost about USD 40,000 and may take about 18 hours of time to be resolved, and resolving the fault in the seal subsystem may cost about USD 80,000 and may take about 72 hours of time to be resolved.

Similarly, on considering the example of a steam turbine, an increase in the exhaust steam temperature for every 1 degree C, and with constant inlet steam properties arising out of reliability issues inside the steam turbine, the exhaust enthalpy may further increase, thereby increasing the energy loss impact associated with it. For example, if a design exhaust temperature value of the turbine is 52 degrees C with 2595kJ/Kg of steam, if the exhaust temperature increases to 54 degrees C, the enthalpy would increase to 2600kJ/Kg of steam. Therefore, an increase in the exhaust temperature by 2 degrees C would result in an enthalpy loss of 5kJ/Kg and consequently, the loss in energy of the steam, per hour, would be 1.38kW-hr/Kg. If the increase in exhaust temperature is left unattended, the energy loss may further accumulate over time. In one example, such an impact of the anomaly detected may be considered to determine the first impact factor. Similarly, an equivalent amount of carbon-dioxide emission may be computed based on the energy loss calculated, to determine the second impact factor. Further, the third impact factor quantifying an economic cost may also be estimated based on the root cause of the detected anomaly, such as an internal damage of steam turbine (which may have a high economic impact), or a condenser leakage (which may have an economic impact similar to the economic impact associated with internal damage), an issue in the supply of cooling water to the condenser (which may have a comparatively lesser economic impact), and the like. Each of these aspects may be considered in computing the impact factors, which may then be combined with data fusion techniques to determine the integrated risk indicator. In one example, the first impact factor, the second impact factor, and the third impact factor may be predicted for each failure stage amongst the one or more failure stages associated with the fault incident on the equipment.

On computing the integrated risk indicator, a risk profile for the equipment may be generated, where the risk profile may include one or more remedial strategies such as a maintenance action, tasks associated with repair, tasks associated with replacement, slowing down the production, or temporarily stopping the production, and the like. The risk profile generated may be provided to personnel of the facility for risk management. In one example, the personnel may implement one of the one or more remedial strategies generated to effectively mitigate an impact of the fault.

Additionally, techniques of the present subject matter may also determine one or more mitigative impacts associated with mitigating a consequence associated with the fault. For example, a first mitigative impact may be determined, where the first mitigative impact is associated with a maintenance action performed on the equipment. Similarly, a second mitigative impact associated with slowing down the equipment may be determined, where slowing down the equipment leads to a production slowdown of the facility and a third mitigative impact associated with shutting down the equipment may be determined, where shutting down the equipment leads to a production shutdown of the facility. Further, a break-even analysis may be performed by comparing at least one of the first mitigative impact, the second mitigative impact, and the third mitigative impact. In one example, the break-even analysis is performed for each failure stage amongst the one or more failure stages associated with the fault.

Therefore, techniques of the present subject matter facilitate risk evaluation of an equipment for a fault alert based on real-time and dynamic data associated with energy efficiency, emission, and economic costs. By quantifying the fault alert in terms of energy values, emission values, and economic values techniques of the present subject matter provide an estimate of the fault's impact, enabling prioritization of actions to control the cascading of primary damages into secondary damages associated with each fault component. The overall impact associated with the fault also helps in anticipating potential failure modes, assessing the likelihood and impact of various failure scenarios, developing effective targeted maintenance strategies, allocating resources more effectively enhancing overall operational reliability and efficiency, and also mitigating unnecessary costs associated with inadequate risk management.

Additionally, techniques of the present subject matter also provide a break-even analysis for a user to choose from either one of the mitigative actions such as a plant slowdown or a plant shutdown based on an economic impact each of the mitigative actions may have. This approach allows for a balance between addressing the fault and minimizing disruption to the production process. Furthermore, techniques of the present subject matter also facilitate simulating future impacts of the fault in the equipment by varying operating parameters from their normal operating ranges, thereby ensuring close monitoring of the operational parameters to maintain them within optimal operating ranges to reduce energy losses, improve equipment efficiency, and minimizing the costs that may be incurred.

The above and other features, aspects, and advantages of the subject matter will be explained with regard to the following description and accompanying figures. It should be noted that the description and figures merely illustrate the principles of the present subject matter along with examples described herein and should not be construed as a limitation to the present subject matter. It is thus understood that various arrangements may be devised that, although not explicitly described or shown herein, embody the principles of the present disclosure. Moreover, all statements herein reciting principles, aspects, and examples thereof, are intended to encompass equivalents thereof. Further, for the sake of simplicity, and without limitation, the same numbers are used throughout the drawings to reference like features and components.

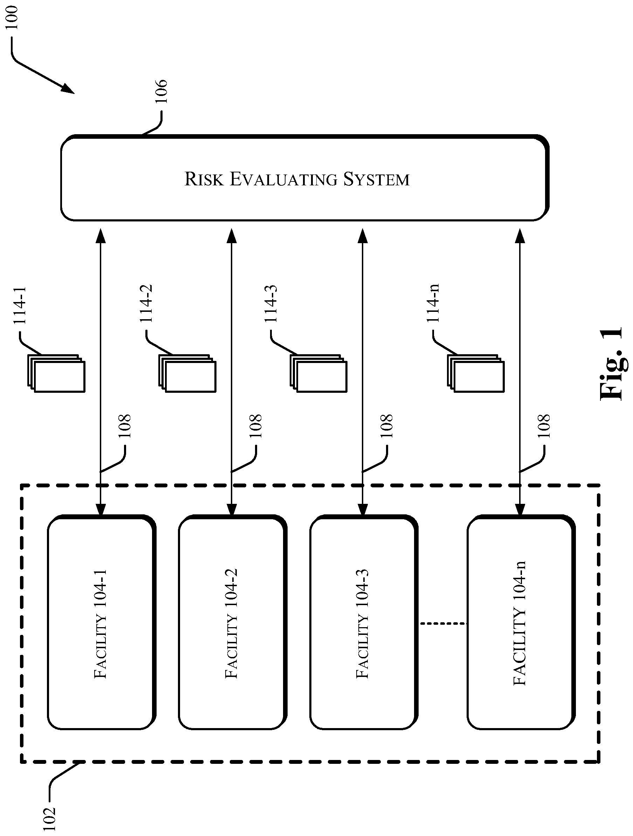

Fig. 1 illustrates a supply chain network environment 100, in accordance with an example implementation of the present subject matter. In one example, the supply chain network environment 100 may include a supply chain network 102 including multiple facilities, 104-1, 104-2, 104-3, ....104-n, collectively and alternatively referred to as multiple facilities 104 or facility 104. For example, but not limited to, the facility 104 may be an industrial plant, an assembling unit of an automobile manufacturing company, a consumer-goods manufacturing unit, a pharmaceutical manufacturing unit, and the like. In one example, the multiple facilities 104 may be distributed across various locations in the supply chain network 102.

Each facility of the multiple facilities 104 may include a facility management system (not shown in the figure). In one example, the facility management system may be employed in each facility 104 for risk management. In one example, the facility management system may be part of a source device (not shown in the figure), where the source device may be an Internet of things (IOT) device, a computing device, a personal computer, a laptop, a tablet, a mobile phone, and the like. In another example, the facility management system may be hosted on a server (not shown in the figure) that may communicate with the source device.

In one example, the facility management system of each of the multiple facilities 104 may be communicatively coupled to a risk evaluating system 106. The facility management systems and the risk evaluating system 106 may communicate over a network 108. The network 108 may be a wireless network or a combination of a wired and wireless network. The network 108 can also include a collection of individual networks, interconnected with each other and functioning as a single large network, such as the Internet. Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), Long Term Evolution (LTE), and Integrated Services Digital Network (ISDN). Depending on the terminology, the communication network includes various network entities, such as gateways and routers; however, such details have been omitted to maintain the brevity of the description.

Further, the risk evaluating system 106 may be implemented in any computing system, such as a storage array, a server, a desktop or a laptop, a computing device, a distributed computing system, or the like. Although not depicted, the risk evaluating system 106 may include other components, such as interfaces to communicate over the network or with external storage or computing devices, display, input/output interfaces, operating systems, applications, data, and other software or hardware components (not depicted for the sake of brevity).

In one example, the risk evaluating system 106 may obtain data 114-1, 114-2, 114-3, ..., 114-n, collectively referred to as data 114, from multiple facilities 104-1, 104-2, 104-3, ....104-n, respectively. In one example, the data 114 generated by the multiple facilities 104, amongst other information, may include information associated with the operations, equipments, and processes of the facility. For example, in a facility, such as an industrial plant, the data 114 could indicate different types of equipments commissioned in the plant, maintenance logs of the various equipments, operating conditions for each of these equipments, personnel data, faults that frequently occur in the plant, symptoms associated with different types of faults, root cause analysis reports for previous faults, equipment repair records, energy consumption patterns during normal conditions and fault conditions, equipment risk assessment reports, facility performance, the costs associated with various equipment, processes and personnel of the facility, and the like.

Upon receiving the data 114 from the facilities 104 within the supply chain network 102, the risk evaluating system 106 may analyze the data 114 to determine an overall impact of a fault incident on an equipment operating in a facility 104, as well as on the supply chain network 102.

In one example, the risk evaluating system 106 may monitor and evaluate the data 114 obtained from various equipments within the facility to evaluate a risk associated with a fault incident on them. In one example, the risk evaluating system 106 may identify various faults incident on multiple equipments operating across multiple facilities 104 and obtain real-time operational parameters associated with the said equipment to detect anomalies. In one example, anomalies may be detected by identifying deviations in the operational parameters from their desired operating ranges. Upon detecting an anomaly, the risk evaluating system 106 may identify the fault in the equipment, and accordingly, may derive impact factors for energy, emissions, and economic impacts associated with the fault based on fault types, operational parameters, and historical data. The risk evaluating system 106 may then compute an integrated risk indicator to measure the current overall impact of multiple faults in multiple equipments, respectively.

Additionally, the risk evaluating system 106 may also determine multiple failure stages that may be associated with a fault in an equipment to assess cascading impacts of the said fault, when the fault is left unattended. Accordingly, the risk evaluating system 106 may generate a risk profile with remedial strategies for fault mitigation. Further, the risk evaluating system 106 may also determine an impact of a mitigative action such as maintenance, plant slowdown, or plant shutdown, and perform a break-even analysis to compare these impacts. In one example, the integrated risk indicator before the mitigative action is performed, for example, through a maintenance event or a change of operating mode, and after the mitigative action is performed may be estimated to measure the effectiveness of the mitigative action.

Therefore, techniques of the present subj ect matter facilitate accurate and comprehensive risk evaluation of equipments based on real-time data in terms of energy efficiency, emission, and economic costs, thereby enabling prioritization of actions, anticipating failure modes, and developing maintenance strategies for efficient risk management. Additionally, techniques of the present subject matter also balance addressing the faults that may occur in a facility with minimized production disruption and enhanced operational reliability in a cost-effective manner.

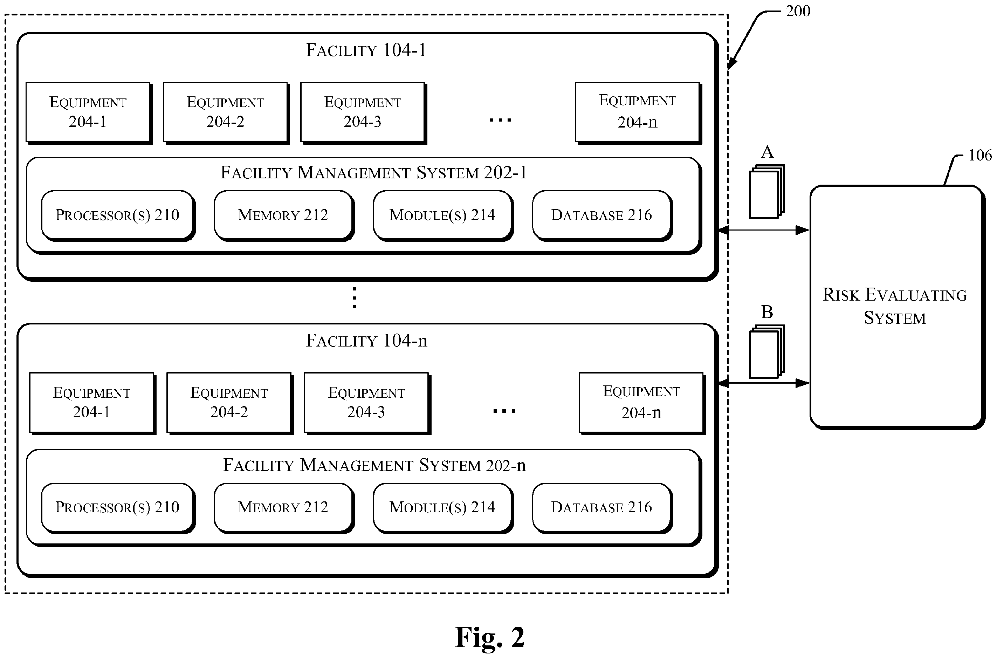

Fig. 2 illustrates an example supply chain network 102, in accordance with an example implementation of the present subject matter. In one example, the supply chain network 200 depicts Facility 104-1 and Facility 104-n communicatively coupled to the risk evaluating system 106. For the sake of simplicity, the following description has been predominantly discussed with reference to Facility 104-1 and Facility 104-n of the supply chain network 200, communicatively coupled to the risk evaluating system 106. However, similar principles may be applicable to all facilities of a supply chain network 200 coupled to the risk evaluating system 106.

In one example, Facility 104-1 of the supply chain network 200 may be located in a first geographical location and Facility 104-n may be located in a second geographical location of the supply chain network 200. Each of the facilities, Facility 104-1, and Facility 104-n, may include a facility management system 202-1, 202-n, respectively. In one example, the facility management system 202-1 of Facility 104-1 and the facility management system 202-n of Facility 104-n may be communicatively coupled to the risk evaluating system 106.

Further, Facility 104-1 and Facility 104-n within the supply chain network 102 may include a plurality of equipments 204-1, 204-2, 204-3, ... 204-n, collectively referred to as equipment 204, associated with the various operations of the facility. For instance, Equipment 204-1 of Facility 104-1 may be a compressor system with multiple interconnected subsystems, each containing multiple subcomponents. For instance, these subsystems may include a main compression unit with impellers or rotors, diffusers, casings, shaft, bearings, and seals; a drive system which includes electric motor or gas turbine, gearbox, coupling, drive shaft, and motor control center or turbine control system; a lubrication system including oil pumps, coolers, filters, reservoir, lines, valves, and temperature and pressure sensors; a cooling system with intercoolers, aftercoolers, cooling water pumps, heat exchangers, cooling towers, and temperature control valves; an Anti-Surge system comprising anti-surge valve, recycle line, flow measurement devices, and anti-surge controller; a gas seal system for centrifugal compressors with seal gas supply system, filters, heaters, primary and secondary seals, and vent and drain systems; and the like. These subsystems may be interconnected through mechanical connections, piping, wiring, and control interfaces, working together to compress gas efficiently and safely for various industrial applications.

Data A and data B from each of these equipments commissioned in Facility 104-1 and Facility 104-n may be collected by the facility management systems 202-1 and 202-n, respectively. For example, considering the example of the compressor unit commissioned in the facility, data A collected from the Equipment 204-1 may include a wide range of parameters across various subsystems. This may encompass operational data such as inlet and outlet pressures, temperatures, and flow rates for each compression stage. Vibration measurements from bearings, shafts, and casings may be continuously monitored. Data from the lubrication system may include data with respect to oil pressure, temperature, and quality. For the cooling system, data including coolant temperatures, flow rates, and heat exchanger efficiencies may be tracked. Further, performance parameters like compressor efficiency, power consumption per unit of gas compressed, and surge margin may be obtained. Additionally, maintenance-related data such as running hours, number of starts and stops, and time since last overhaul may be recorded.

For the sake of simplicity, the following description has been discussed with reference to the facility management system 202-1 of Facility 104-1, of the supply chain network 102. However, it may be understood that similar principles may be applicable to all other facilities 104 of the supply chain network 102. In one example, the facility management system 202-1 includes a processor 210 and a memory 212. The processor(s) 210 may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly include, without limitation, digital signal processor (DSP) hardware, network processor, application specific integrated circuit (ASIC), field programmable gate array (FPGA), read only memory (ROM) for storing instructions, random access memory (RAM), non-volatile storage. Other hardware, standard and/or custom, may also be included. The memory 212 may include any computer-readable medium including, for example, volatile memory (e.g., RAM), and/or non-volatile memory (e.g., EPROM, flash memory, etc.).

The facility management system 202-1 may further include modules 214, such as an asset monitoring module, process flow control module, data integration module, and the like (not shown). In one example, the modules 214 may be implemented as a combination of hardware and firmware. In examples described herein, such combinations of hardware and firmware may be implemented in several different ways. For example, the firmware for the module 214 may be processor 210 executable instructions stored on a non-transitory machine-readable storage medium and the hardware for the module 214 may include a processing resource (for example, implemented as either a single processor or a combination of multiple processors), to execute such instructions.

In the present examples, the machine-readable storage medium may store instructions that, when executed by the processing resource, implement the functionalities of the modules 214. In such examples, the facility management system 202-1 may include the machine-readable storage medium storing the instructions and the processing resource to execute the instructions. In other examples of the present subject matter, the machine-readable storage medium may be located at a different location but accessible to the facility management system 202-1 and the processor(s) 210.

The facility management system 202-1 may further include a database 216, that serves, amongst other things, as a repository for storing data A that may be fetched, processed, received, or generated by the modules. For example, but not limited to, data A associated with the equipments 204 of Facility 104-1 may include information regarding the sub-systems of the equipment, the components of the sub-systems of the equipment and performance metrics of each of these sub-systems and sub-components such as operational efficiency, energy consumption rates, and output quality, data associated with condition monitoring of each component of the facility, such as vibration levels, temperature readings, acoustic emissions, lubricant data, voltage measurements, current measurements, loading, etc., energy consumption of different equipments utilized in the facility, maintenance records, historical maintenance logs, historical operating conditions, failure patterns, root cause analysis for faults that have occurred in the past, and the like.

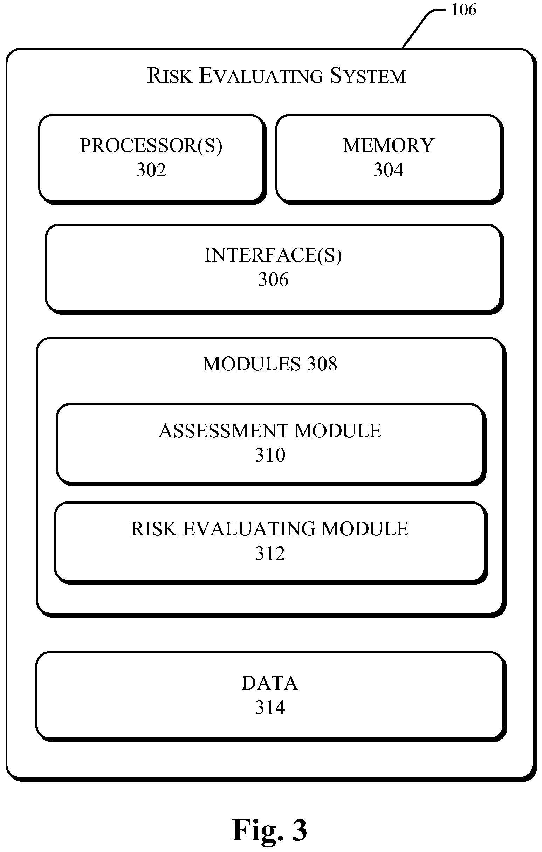

In one example, the facility management system 202a of Facility 104-1 may integrate and store all the data A collected from multiple equipments in the database 216 of the facility management system 202a. Similarly, data B from the plurality of equipments 204 associated with Facility 104-n of the supply chain network 102 may be collected and stored in the facility management system 202-n. In one example, data A from Facility 104-1, data B from Facility 104-n of the supply chain network 102 may be communicated to risk evaluating system 106. Based on such data obtained from the facility management systems 202-1 and 202-n, the risk evaluating system 106 may analyze the data to determine an overall impact of the fault in an equipment. The risk evaluating management system 106 has been discussed with reference to Fig. 3.

Fig. 3 illustrates a risk evaluating system 106, in accordance with an example implementation of the present subject matter. The risk evaluating system 106, alternatively referred to as system 106, is to accurately determine an overall impact of a fault in an equipment operating in a facility. The facility, such as an industrial facility, may include multiple equipment, such as steam turbines, compressors, generators, motors, pumps, conveyor belts, hydraulic presses, boilers, HVAC systems, blowers, centrifugal compressors, turbo expanders, recompressors, and the like. A fault associated with these equipments spanning across multiple facilities may be analyzed to determine an overall impact of the fault in the equipment, the facility in which the equipment is operating in, as well as the supply chain network.

In one example, the risk evaluation system 106 may include a processor 302 and a memory 304 coupled to the processor 302. The functions of functional block labelled as "processor(s)", may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly include, without limitation, digital signal processor (DSP) hardware, network processor, application specific integrated circuit (ASIC), field programmable gate array (FPGA), read only memory (ROM) for storing instructions, random access memory (RAM), non-volatile storage. Other hardware, standard and/or custom, may also be included. Further, an interface(s) 306 may allow the connection or coupling of the system 106 with one or more other devices (say devices or systems within the supply chain network), through a wired (e.g., Local Area Network, i.e., LAN) connection or through a wireless connection (e.g., Bluetooth^{®}, Wi-Fi). The interface(s) 306 may also enable intercommunication between different logical as well as hardware components of the system 106.

The memory 304 may include any computer-readable medium including, for example, volatile memory (e.g., RAM), and/or non-volatile memory (e.g., EPROM, flash memory, etc.).

The risk evaluation system 106 may further include modules 308, such as an assessment module 310 and a risk evaluation module 312. The module(s) 308, in one example, may be implemented as a combination of hardware and firmware. In examples described herein, such combinations of hardware and firmware may be implemented in several different ways. For example, the firmware for the module may be processor executable instructions stored on a non-transitory machine-readable storage medium and the hardware for the module may include a processing resource (for example, implemented as either a single processor or a combination of multiple processors), to execute such instructions.

In the present examples, the machine-readable storage medium may store instructions that, when executed by the processing resource, implement the functionalities of the module(s) 308. In such examples, the risk evaluation system 106 may include the machine-readable storage medium storing the instructions and the processing resource to execute the instructions. In other examples of the present subject matter, the machine-readable storage medium may be located at a different location but accessible to the risk evaluation system 106 and the processor 302.

The risk evaluation system 106 may further include data 314, that serves, amongst other things, as a repository for storing data that may be fetched, processed, received, or generated by the modules 308. The data 314 may include equipment data, facility data, data corresponding to the systems used in each facility of the supply chain, OEM data for all equipments across the supply chain, maintenance logs, fault tree signatures, various threshold and pre-determined data, personnel data, maintenance schedules, health status data corresponding to various equipment across multiple facilities, and the like. In an example, the data 314 may be stored in the memory 304.

In one example, the assessment module 310 of the risk evaluating system 106 may monitor multiple operational parameters corresponding to the equipment. The operational parameters corresponding to the equipment may include operational parameters obtained from various sub-systems within the equipment, multiple components and sub-components associated with the various sub-systems of the equipment, and the like. These operational parameters may be obtained from one or more sensing elements coupled to the equipment. For example, sensors attached to the AC motor may collect data on various operational parameters such as motor temperature, vibration levels, electrical current, and rotational speed over a specified time period. Although the detailed description has been predominantly described with reference to a fault in the equipment as a whole, it would be understood that a fault in the equipment may include a fault in any one of the components, sub-components, or sub-systems of the equipment, and is not to be construed as a limitation.

The operational parameters may be monitored to identify a first operational parameter from amongst the multiple operational parameters, to be beyond a first operating range. Any deviation in the operational parameter from the first operating range may be characterized as an anomaly. For instance, while monitoring the operational parameters such as temperature, vibration levels, electrical current, and rotational speed of an AC motor, it may be observed that the temperature levels of the AC motor are beyond a desired range of temperature levels for the said motor. These values, which are beyond the said range may be detected as an anomaly.

On detecting an anomaly in any one of the operational parameters, a fault associated with the equipment may be identified. For example, in an equipment such as a compressor-turbine train, an anomaly in the discharge temperature or discharge pressure of the compressor may indicate a compressor performance degradation fault. Similarly, in a compressor-motor train, an anomaly in the current of the motor may indicate a motor current imbalance fault, in pump-motor train an anomaly in the suction pressure, or flow suction temperature of the pump may indicate a pump performance degradation fault, and the like. Further, the operational parameters may be monitored on identifying the fault, to determine an impact of the fault on the equipment in real-time. In one example, the operational parameters may be monitored at pre-determined time intervals, for example, every 5 minutes, 15 minutes, or one hour, where the pre-determined time intervals may be determined based on the severity of the fault, or criticality of the equipment, and the like. In another example, the operational parameters may be monitored continuously.

On identifying the fault, the risk evaluating module 312, may derive at least one of a first impact factor corresponding to an energy impact, a second impact factor corresponding to an emission impact, and a third impact factor corresponding to an economic impact associated with the said fault. In one example, the first impact factor, the second impact factor, and the third impact factor may be derived based on the operational parameters, a type of the equipment, and a type of fault, since each equipment may experience different type of faults and an impact corresponding to each fault may be different.

In one example, the first impact factor may be derived by quantifying an energy loss associated with the fault in the equipment. The energy loss associated with the equipment may be computed from the operational parameters obtained for the equipment. For example, multiple operational parameters associated with an equipment such as a compressor-turbine train may be monitored to detect one or more anomalies associated with the compressor of a compressor-turbine train. In one example, anomalies such as an anti-surge valve anomaly, anomaly in the inlet supply air of the compressor, anomaly in a compressor bearing jam, and the like may be detected. Based on the type of anomaly that is detected, an energy loss associated with the fault in the compressor-turbine train may be derived. For instance, on detecting the anomaly in the inlet supply of the compressor, a first operating power of the compressor before the occurrence of the fault in the compressor and a second operating power after the occurrence of the fault in the compressor may be computed. When the second output power computed exceeds the first output power, a power loss for the compressor may be calculated by determining a difference between the second output power and the first output power. Further, an average power loss over a duration of one hour may be computed from a pre-defined number of samples, such as 5 samples or 10 samples, taken at predetermined time intervals, for example, every 10 minutes to estimate the energy loss that would be incurred on a daily basis, thereby enabling quantification of an energy loss impact on the compressor-turbine train resulting from a fault in the compressor's inlet supply. Similarly, for an equipment such as a pump-motor train, on the incidence of a fault, for example, on the motor, the loss of energy associated with the motor may be computed to estimate the energy loss for a predefined time-period. Therefore, since the energy loss is computed based on the type of fault associated with the equipment, and the type of equipment, an accurate evaluation of the energy impact on each equipment of the facility may be performed. In one example, on determining the energy loss associated with a fault in the equipment, a cost associated with the energy loss that would be incurred daily for the equipment may be computed to determine an impact of the energy loss on the facility, and in turn on the supply chain the facility is a part of.

Similarly, the second impact factor may be derived by quantifying an emission loss associated with the fault in the equipment. The derivation of the second impact factor may also be based on the type of equipment, the type of fault, and the operational parameters associated with the equipment. For example, for a Dry Gas Seal (DGS) fault in a primary vent or a secondary vent of a seal sub-system, the emission amount corresponding to the fault in each of these vents may be calculated. Based on the current emission level associated with the fault in the primary vent or the secondary vent, an amount of emission loss that may be generated for the fault in the seal subsystem after a predefined amount of time may be determined to analyze the impact of the fault with respect to the emission loss that may be incurred. Similarly, in another example, to quantify the emission loss a flaring amount associated with the equipment may be determined. On computing the emission loss for the corresponding type of fault, a cost that may be associated with the emission loss may also be computed for the equipment to determine an impact of the emissions on the facility.

Further, in one example, the third impact factor may be derived by quantifying an economic loss associated with the fault in the equipment. To quantify an economic loss associated with the fault, an impact of a production loss time and a number of resources required to resolve the fault may be determined. The production loss time may be indicative of a time period for which the equipment is not in operation. For example, the production loss time may include a coast down time: a time required to decelerate an equipment, a maintenance time: a time required to perform a maintenance action, and a start-up time: a time required to bring the equipment to operate in a stable manner, and the like. In one example, the coast down time, maintenance time, and start-up time may be dependent on the type of the equipment, design of the said equipment, and the like. For example, the coast down time of a steam turbine may vary between 1-3 hours, whereas the coast down time for a small induction motor may be 10-60 seconds, and the like. Similarly, the maintenance time for an action such as bearing replacement of a barrel type casing may need 8-12 hours for the plant to be shutdown, whereas for replacement of a split type casing may need 24-48 hours and the like. Each of these time factors may be considered in determining the production loss time to accurately detect an economic loss associated with a fault in the equipment. In one example, the production loss may depend on the plant capacity, product price and start up time. On estimating the production loss time, a cost that would be incurred during this time period may be determined.

In one example, resources such as a number of man hours required to resolve the fault, and a number of personnel required to resolve the fault, the costs that may be incurred in resolving the fault, and the like may be determined. For example, for a fault that is caused due to an anomaly in the lubrication system of the equipment, a potential amount of time to carry out a maintenance action that would be required to resolve the fault and a cost that may associated with resolving the fault may be determined. For example, it may be determined that resolving the lubrication issue by carrying out a maintenance action on the equipment would involve 1 to 8 hours and a cost associated with resolving the fault would be around USD 5-50. Similarly, it may be determined that the time required to resolve a fault caused due to the misalignment in the shaft by carrying out a maintenance action may be about 2-5 days and the costs that would be incurred to resolve the fault would be USD 100k, and the like.

In another example, the first impact factor, the second impact factor, and the third impact factor may be simulated. For example, a user, such as a plant administrator may wish to determine these impact factors for different operational parameters that are beyond a desired operating range. Based on the operational parameters provided by the user as an input, the risk evaluating system 106 may compute the first, second and third impact factors associated with the fault. For example, if a plant administrator wishes to assess the effect of increasing or decreasing the exhaust temperature of a steam turbine, an impact associated with such a change in temperature on each component or sub-system of the equipment may be determined and provided to the user, thereby allowing the user to closely monitor the operating parameters of an equipment. By providing the potential impact of consequences that may result from potential operational parameter deviations, users may strive to maintain the operational parameters within optimal operating ranges to ensure proactive management of equipment operation, which may lead to a reduction in energy losses, improved equipment efficiency, and also minimize the costs that may be incurred.

Further, based on the first impact factor, the second impact factor, and the third impact factor, the risk evaluating module 312 may compute an integrated risk indicator. The integrated risk indicator being indicative of a current overall impact of the fault on the equipment in terms of energy efficiency, emissions, and economy. In one example, the integrated risk factor may be determined at pre-determined time intervals, for example every 1 hour, and the like. In one example, a user may set the pre-determined time intervals based on the criticality of the equipment, and the like. In one example, the integrated risk indicator may be computed by combining the first impact factor, the second impact factor, and the third impact factor. In one example, the integrated risk indicator may be computed based on data fusion techniques such as fuzzy logic, Dempster Shafer technique, Bayesian belief network. The following example is only to elucidate an example technique to compute the integrated risk indicator and is not to be construed as a limitation. To compute the integrated risk indicator using fuzzy logic, in one example, a fuzzy member function associated with each of the impact factors may be constructed. That is, a first impact factor fuzzy membership function, a second impact factor membership function, and a third impact factor fuzzy membership function may be constructed. Additionally, a fuzzy membership function for a risk associated with the fault in the equipment may also be computed. As would be understood to a person skilled in the art, based on these membership functions and a set of fuzzy rules determined, the integrated risk indicator may be computed.

When a fault persists in the equipment, the persisting fault may lead to several consequent or simultaneous faults either within the sub-systems of the equipment, or sub-components of the sub-systems, or other equipments connected to the equipment associated with the fault. Each of these individual faults or simultaneous faults may have different consequences on the equipment or the facility. Therefore, to assess an overall impact of the fault, when the fault in an equipment is left unattended, the risk evaluating system 106 may determine one or more failure stages associated with the fault incident on the equipment. In one example, each failure stage of the one or more failure stages may be indicative of a cascading impact of the fault on one or more equipment of the facility. For example, a first failure stage associated with the fault may correspond to an impact of the fault in the first equipment as a result of a fault incident on the said equipment, a second failure stage may correspond to a fault in the second equipment due to the fault in the first equipment being unresolved, a third failure stage may correspond to a fault in a third equipment due to the fault in the second equipment being, and the like.

In one example, the integrated risk indicator computed for each failure stage may be indicative of an overall impact of one or more faults in the said equipment. In one example, the faults in the equipment may include individual faults may occur in one or more components or sub-components of one or more sub-systems of the equipment, independent of each other within the equipment. In another example, the faults may include simultaneous faults, where a fault in one component or one sub-system of the equipment may result in another fault in another subcomponent or another sub-system of the said equipment, and the like. In another example, the first impact factor, the second impact factor, and the third impact factor for each failure stage amongst the one or more failure stages associated with the fault incident on the equipment.

In one example, with the progression of the failure stages, the impact of the fault may also increase indicating an increase in the energy impact, the emission impact, and the economic impact. For instance, in a power generation facility that includes a gas turbine, a steam turbine, and a generator connected in a combined cycle configuration, a fault in the gas turbine's combustion system may result in incomplete fuel combustion, which may further lead to reduced efficiency of the gas turbine. The fault in the gas turbine, may be characterized as the first failure stage. Consequently, the incomplete combustion in the gas turbine may further lead to lower exhaust gas temperatures, which may affect the heat recovery steam generator connected to the gas turbine. The reduced steam production may lead to a fault in the steam turbine, which may further result in reduced power output and efficiency of the steam turbine. The fault in the steam turbine, as a consequence of the fault in the gas turbine may be characterized as the second failure stage. The reduced steam output and potential temperature fluctuations from the steam turbine may further cause stress on the generator's rotor. This may lead to vibration issues or electrical imbalances in the generator and may result in a fault in the generator. The fault in the generator, as a consequence of the fault in the steam turbine, may be characterised as the third failure stage, and the like. Therefore, as would be understood, the impact associated with each failure stage in terms of energy losses, emission losses, as well as economic losses may also increase with each subsequent failure stage.

On considering the same example as discussed above, for the first failure stage, the first impact factor may indicate that with a decrease in the gas turbine efficiency, a higher amount of fuel may be needed to maintain the designed output power, the second impact factor may indicate that increases emissions of pollutants such as NOx and CO due to incomplete combustion has increased, and the third impact factor may indicate that higher fuel costs may be incurred. For the second failure stage, the first impact factor may indicate a further reduction in the overall plant efficiency due to the decreased steam turbine output, the second impact factor may indicate further potential increase in the overall plant emissions per unit of electricity generated, and the third impact factor may indicate reduction in the power generation capacity leading to lower revenue and potential penalties for failing to meet the contracted production demands, and the like. Similarly, for the third failure stage, the first impact factor may indicate that a further decrease in generator efficiency due to increased mechanical and electrical losses, the second impact factor may indicate that an indirect increase in emissions per unit of electricity due to overall plant inefficiency, and the third impact factor may indicate a risk of catastrophic generator failure, potentially leading to extended downtime, high repair or replacement costs, and significant loss of revenue. Accordingly, the integrated risk factor may be computed for each failure stage associated with each fault in the equipment to evaluate the overall impact of the fault in the equipment. Therefore, since the integrated risk indicator computed for each failure stage takes into account the first impact factor, the second impact factor, and the third impact factor computed for every fault in the equipment, at every failure stage, techniques of the present subject matter accurately provide impacts in terms of energy efficiency, emissions, and economic factors.

Additionally, in one example, on determining the integrated risk indicator for one or more equipments operating in the facility, the risk evaluating module 312 may assign a priority index to the one or more equipments operating in the facility in correspondence to a value of the integrated risk indicator determined for each equipment of the one or more equipments operating in the facility. In another example, the risk evaluating system 106 may assign a priority index to the components and sub-components within the multiple interconnected sub systems of the equipment based on the integrated risk indicator computed for each fault associated with the equipment.

Based on the integrated risk indicator, a risk profile for the equipment may be generated. In one example, the risk profile, amongst other information, may include a value associated with the integrated risk indicator computed for each fault associated with the equipment. Additionally, the risk profile may also indicate a value associated with each of the first impact factor, the second impact factor, and the third impact factor derived for each fault associated with the equipment. The following example of indicating the integrated risk indicator on a scale of 0-100 is only to elucidate the principles of the present subject matter and is not to be construed as a limitation. For example, a risk profile for a gas turbine in a power plant experiencing multiple faults might include an integrated risk indicator of 85 on a scale of 0-100. In one example, the risk profile may also include an integrated risk indicator value associated with each fault in the equipment, for example, the integrated risk indicator for a combustion system fault may be determined as 35, the integrated risk indicator for a turbine blade wear fault may be determined as 25, and integrated risk indicator for a bearing vibration fault may be determined as 25, and the like. In one example, the risk profile may also include the values of the first impact factor, the second impact factor, and the third impact factor derived for each type of fault.

Additionally, the risk profile may also include one or more remedial strategies associated with resolving the fault in the equipment. For example, the risk profile may include one or more remedial strategies such as a maintenance action, tasks associated with repair, tasks associated with replacement, slowing down the production, or temporarily stopping the production, and the like. For instance, one or more remedial strategies may include performing an online oil analysis with an estimated 1-hour downtime to assess the oil quality and contamination levels in the oil for a lubrication system fault, or performing an online combustion tuning with an estimated 4-hour period of reduced load operation for a gas turbine instability fault, or initiating an online steam wash procedure during the next 48 hours of operation for a blade fouling fault, or implementing a 15% load reduction for 24 hours while conducting advanced vibration analysis for a fault in a generator, or if the issue persists, scheduling an emergency shutdown for rotor balancing and bearing inspection, potentially requiring a 72-hour downtime, and the like. In one example, these strategies may be generated by weighing the trade-offs between immediate intervention, reduced operation, and full shutdown based on the severity of the fault and its potential impact on overall plant performance and reliability.

Further, the risk evaluating module may also determine one or more mitigative impacts associated with the one or more remedial strategies generated. For example, a first mitigative impact may be determined, where the first mitigative impact is associated with a maintenance action performed on the equipment. Similarly, a second mitigative impact associated with slowing down the equipment may be determined, where slowing down the equipment leads to a production slowdown of the facility and a third mitigative impact associated with shutting down the equipment may be determined, where shutting down the equipment leads to a production shutdown of the facility. In one example, the first mitigative impact, the second mitigative impact, and the third mitigative impact may also be included in the risk profile.

In one example, the risk evaluating module 312 may perform a break-even analysis amongst the one or more mitigative impacts determined. In one example, the break-even analysis may be performed by comparing at least one of the first mitigative impact, the second mitigative impact, and the third mitigative impact and including the results of such an analysis in the risk profile generated for the equipment. In one example, the break-even analysis may be performed for each failure stage amongst the one or more failure stages associated with the fault.

In one example, the risk profile generated may be provided to personnel of the facility for risk management. For example, the risk profile may be provided to a plant operator to implement one of the one or more remedial strategies generated to effectively mitigate an impact of the fault. Therefore, techniques of the present subject matter facilitate risk evaluation of an equipment for a fault alert based on real-time and dynamic data associated with energy efficiency, emission, and economic costs. By quantifying the fault alert in terms of energy values, emission values, and economic values techniques of the present subject matter provide an estimate of the fault's impact, enabling prioritization of actions to control the cascading of primary damages into secondary damages associated with each fault component. The overall impact associated with the fault also helps in anticipating potential failure modes, assessing the likelihood and impact of various failure scenarios, developing effective targeted maintenance strategies, allocating resources more effectively enhancing overall operational reliability and efficiency, and also mitigating unnecessary costs associated with inadequate risk management.

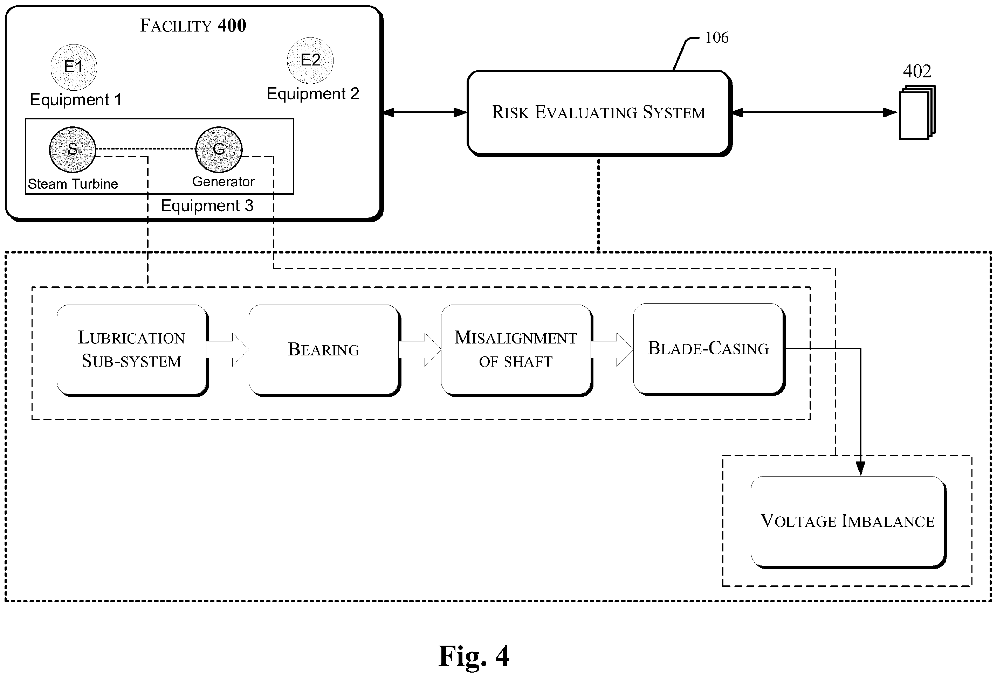

Fig. 4 illustrates an example of risk management in an industrial plant 400, in accordance with an example implementation of the present subject matter. The following example illustrates risk management of an industrial plant 400, such as a power generation unit, and is not to be construed as a limitation. In one example, the power generation unit 400 may be equipped with multiple equipments such as auxiliary power systems, gas turbines, turbine-generator trains, condensers, transformers, and the like, depicted as Equipment 1, Equipment, 2, Equipment 3, ... Equipment n. The following example elucidates principles of the present subject matter with reference to an interconnected system of a steam turbine and a generator depicted as Equipment 3. In one example, on the occurrence of a fault in the lubrication system of the steam turbine of Equipment 3, the risk evaluating system may determine an integrated risk indicator to indicate an overall impact of the said fault on the equipment in terms of an energy efficiency impact, an emissions impact, and an economic impact.

Additionally, based on the operational parameters from the equipment, the type of fault identified in the equipment, and historical data associated with similar faults in the same equipment or other similar equipment, the risk evaluating system may predict an impact of the equipment for a predefined time period. In one example, a user, such as a plant operator may set the predefined time period to understand the impact of the fault incident on the equipment. For example, the plant operator may wish to understand the impact of the said fault over the next three months. The risk evaluating system may accordingly determine the first impact factor, the second impact factor, the third impact factor, and the integrated risk indicator over the predefined time period. In one example, the risk evaluating system may also determine the impact of fault when left unresolved and predict the subsequent faults that may occur in the same equipment, that is, in the components and sub-components of the subsystems in the same equipment, or in other equipment of the facility 400. Additionally, the risk evaluating system 106 may also determine an impact associated with each of these subsequent faults in terms of energy efficiency, emissions, and economic impact on the equipment, and the facility 400.

In one example, the risk evaluating system may predict the impact associated with each subsequent fault based on the operational data obtained from the equipment, the type of fault incident on the equipment, and historical data. Historical data may include fault occurrence patterns, such as frequency and timing of specific faults in relation to operational hours or cycles, past subsequent faults associated with the said fault on the same equipment or similar equipments, fault progression timelines depicting how minor issues in the past escalated into major breakdowns, correlation between initial symptoms and subsequent failures, component lifespan data under different fault conditions, performance degradation trends associated with specific faults, cross-equipment impact data, operational parameter that preceded fault occurrences, and the like.

Accordingly, for the fault incident on Equipment 3, the risk evaluating system may indicate that when the lubrication fault remains unresolved for a first time period, for example, 2-3 days, the lubrication fault may lead to a subsequent fault in the bearing sub-system of the steam turbine. Further, a fault in the bearing sub-system may lead to misalignment fault in the turbine shaft, which when unresolved, leads to the blade-casing failure of the turbine, marking the failure of the steam turbine of Equipment 3. Furthermore, a failure of the steam turbine may further lead to a fault in the generator, by causing a voltage imbalance in the generator, in-turn leading to a voltage imbalance fault in the generator, and so on.

In one example, on predicting the subsequent faults that may occur, the risk evaluating system may determine the first impact factor, the second impact factor, and the third impact factor for each of these faults to compute the integrated risk indicator. In one example, the integrated risk indicator and the individual impact factors computed for each predicted fault may be provided to the plant operator, thereby providing a comprehensive risk profile 402 including the overall risk and the specific areas of concern associated with each fault, for efficient risk management.

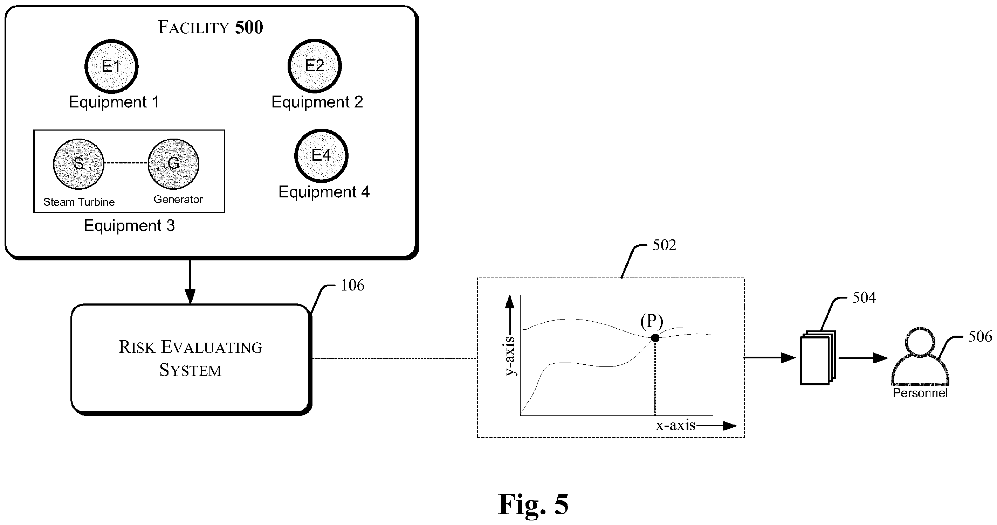

Fig. 5 illustrates another example of risk management 500, in accordance with an example implementation of the present subject matter. In one example, the risk evaluating system 106, in addition to determining an integrated risk indicator for one or more equipment of the facility, may also assign a priority index to the one or more equipments operating in the facility in correspondence to a value of the integrated risk indicator determined for each equipment of the one or more equipments operating in the facility. For instance, when multiple faults occur on multiple equipments of the facility, some faults on some equipment may be more critical in terms of an impact they may have on the equipment as well as the facility, than some faults that may occur on non-critical equipments. To this end, prioritization of faults to be mitigated based on the potential impact they could have on the facility as a whole may be performed. The following example illustrates a scenario with multiple faults incident simultaneously one multiple equipments and is not to be construed as a limitation.

Considering the example, of an industrial plant, such as a chemical processing plant 500, multiple faults may occur across multiple equipment such as a main process feed pump, depicted as Equipment 1, a refrigerant compressor, depicted as Equipment 2, and a boiler feed water pump, depicted as Equipment 4. In one example, the fault in Equipment 1 may be incident on the mechanical seal system, causing increased leakage and potential contamination. Simultaneously, Fault in Equipment 2 may be incident on the product cooling system experiencing a malfunction in its capacity control mechanism, affecting cooling efficiency and product quality and fault in Equipment 4 may be incident on its variable frequency drive causing fluctuations in water supply to the steam generation system.

The risk evaluating system may assess these faults and determine that for Equipment 1, the energy efficiency impact results in increased power consumption due to inefficient operation, the emission impact would be negligible, whereas the economic impact would be high due to a possible unplanned plant shut down. For Equipment 2, the energy efficiency impact may be determined to be high with increased power consumption, the emission impact may be determined to be moderate due to refrigerant leakage and the economic impact may be determined to be very high due production of products that are different from the desired specifications and also due to reduced plant throughput. Further, for Equipment 3, the energy efficiency impact may be determined to be high with fluctuations in energy consumption affecting the overall plant efficiency, the emissions impact may be determined to be very low with minimal effect on emissions, and the economic impact may be determined to be high with the risk of unstable steam supply affecting multiple processes.

Based on these impacts, the risk evaluating system 106 may derive the first impact factor, the second impact factor, and the third impact factor to compute the integrated risk indicator associated with each of these equipments and may assign Equipment 2 with the highest priority index due to the potential overall impact of the fault in Equipment 2, when compared to the faults in the Equipment 4 and Equipment 1, with Equipment 1 having the least priority index. In one example, the prioritization of the one or more faults may be provided in the risk profile, as described with reference to Fig. 3, that is generated for each fault associated with the equipment. This prioritization facilitates efficient allocation of resources, addressing the most critical issues first to minimize overall risk and impact on the chemical plant's production capacity, product quality, efficiency, and long-term equipment health.

Additionally, the risk evaluating system 106 may also perform a break-even analysis represented by an example graph 502, for each fault to determine one or more remedial strategies for optimal course of action. The graph 502 only elucidates the principles of the present subject matter and is not to be construed as a limitation. In one example, graph 502 may represent the break-even analysis between any two remedial strategies, such as production slowdown associated with resolving the fault and production shutdown associated with resolving the fault, where the cost associated with each remedial strategy is plotted along the y-axis and time is plotted along the x-axis. Further, on performing the break-even analysis between one or more remedial strategies, a break-even point (P) may be identified. In one example, based on the break-even point (P), personnel of the facility may make informed decisions to implement the most optimal remedial strategy to ensure efficient and effective risk management associated with the fault on the equipment.

Considering the example as discussed above, the risk evaluating system may determine that a cost associated with immediate repairs for Equipment 2 versus the cost associated with reduced production and increased energy consumption. Such an analysis may also indicate that immediate repair may be more cost-effective due to the high economic impact reduced product quality and reduced plant throughput may have. Similarly, for Equipment 4, the cost of running the equipment at reduced efficiency may be compared to a controlled shutdown for repair. Such an analysis may further indicate that a short-term efficiency loss is preferable when compared to a full shutdown, but the repair should be scheduled within the next 72 hours, and the like. In one example, the break-even analysis associated with each fault associated with the equipment, along with a breakeven point (P) may be included in the risk profile 504, as described with reference to Fig. 3, that is generated for each fault associated with the equipment. The risk profile 504 may be provided to personnel 506 of the facility 500, such as a plant manager. This break-even analysis helps users such as plant managers or operators of the facility to make informed decisions about whether to continue operations at reduced capacity or initiate immediate repairs, balancing short-term production goals with long-term equipment health and efficiency.

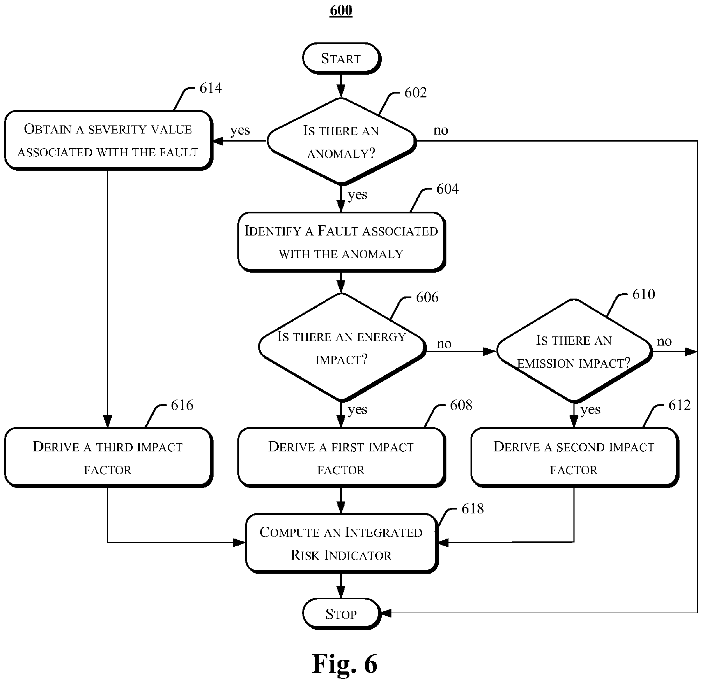

Fig. 6 illustrates an example method 600 for determining an impact of a fault in an equipment, in accordance with an example implementation of the present subject matter. The order in which the method 600 is described is not intended to be construed as a limitation, and any number of the described method blocks can be combined in any order to implement method 600 or an alternative method. Additionally, individual blocks may be deleted from the method 600 without departing from the spirit and scope of the subject matter described herein. Furthermore, the method 600 may be implemented in any suitable hardware, computer readable instructions, firmware, or combination thereof. For discussion, the method 600 is described with reference to the implementations illustrated in Fig(s). 1-5.

At block 602, the method 600 includes detecting the presence of an anomaly in one or more operational parameters monitored for an equipment.

At block 604, the method 600 includes identifying a fault in the equipment associated with the anomaly detected

At block 606, the method includes 600 determining whether the fault in the equipment has an energy efficiency impact on the equipment, as well as the facility. In one example, if it is determined that the fault in the equipment has an impact on the energy efficiency of the equipment as well as the facility the equipment is operating in, the method 600 at block 608 includes deriving a first impact factor. In one example, the first impact factor may correspond to an energy impact associated with the fault. However, if it is determined that the fault in the equipment has no impact on the energy efficiency of either the equipment, or on the facility in which the equipment is operating, the method 600 at block 610 further determines whether the fault in the equipment has an impact on the emissions of the equipment, as well as the facility the equipment is operating in. In one example, if it is determined that the fault in the equipment has an impact on the emissions of the equipment as well as the facility the equipment is operating in, the method 600 at block 612 includes deriving a second impact factor. In one example, the second impact factor may correspond to an emissions impact associated with the fault. However, if it is determined that the fault in the equipment has no impact on the emissions associated with either the equipment, or on the facility in which the equipment is operating, in one example, the method may proceed to computing the integrated risk indicator based on the third impact factor, if any.

Further, at block 614 on identifying the fault the method 600 includes determining a severity of fault and at block 616, the method 600 includes deriving the third impact factor. In one example, the third impact factor may correspond to an economic impact associated with the fault.

At block 618, the method includes determining an integrated risk indicator based on the first impact factor, the second impact factor, and the third impact factor. In one example, the integrated risk indicator may be computed based on data fusion techniques such as fuzzy logic, Dempster Shafer technique, Bayesian belief network.

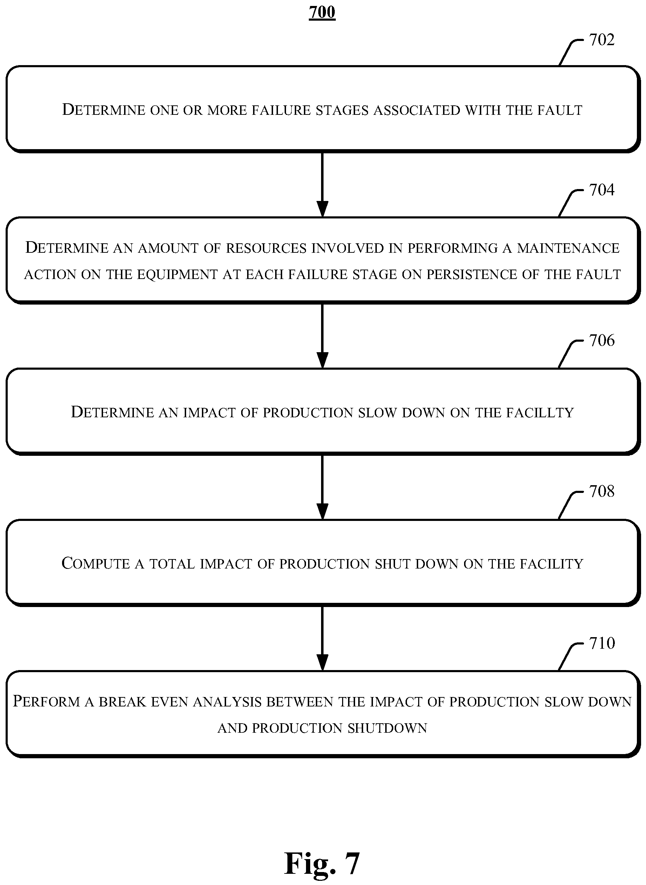

Fig. 7 illustrates an example method 700 for a break-even analysis associated with a fault in an equipment, in accordance with an example implementation of the present subject matter. The order in which the method 700 is described is not intended to be construed as a limitation, and any number of the described method blocks can be combined in any order to implement method 700 or an alternative method. Additionally, individual blocks may be deleted from the method 700 without departing from the spirit and scope of the subject matter described herein. Furthermore, the method 700 may be implemented in any suitable hardware, computer readable instructions, firmware, or combination thereof. For discussion, the method 700 is described with reference to the implementations illustrated in Fig(s). 1-6.

At block 702, the method 700 includes determining one or more failure stages associated with the fault. In one example, each failure stage of the one or more failure stages may be indicative of a cascading impact of the fault on one or more equipment of the facility. For example, a first failure stage associated with the fault may correspond to an impact of the fault in the first equipment as a result of a fault incident on the said equipment, a second failure stage may correspond to a fault in the second equipment due to the fault in the first equipment being unresolved, a third failure stage may correspond to a fault in a third equipment due to the fault in the second equipment being, and the like. Further, each failure stage be indicative of an overall impact of one or more faults in the said equipment. In one example, the faults in the equipment may include individual faults may occur in one or more components or sub-components of one or more sub-systems of the equipment, independent of each other within the equipment. In one example, the one or more failure stages associated with a fault incident on an equipment may be predicted based on operational parameters obtained from the associated equipment and historical data, where historical data may include fault patterns for similar faults that have occurred in the same equipment or similar equipment in the past, historical fault progression patterns, past operational parameters which resulted in faults, and the like.

At block 704, the method 700 includes determining a number of resources involved in performing a maintenance action on the equipment at each failure stage on persistence of the fault. In one example, on predicting the subsequent faults and failure stages, a cost associated with a maintenance action for each stage, the number of hours required to perform the said maintenance action, and the like may be determined. For example, it may be determined that for a maintenance action to be performed for a fault in the lubrication sub-system, a cost of about USD 10,000 may be incurred, and the time required to perform the maintenance action may be 4 hours. Similarly, for a fault in the bearing subsystem, it may be determined that a cost of about USD 40,000 may be incurred, and the time required to perform the maintenance action may be 18 hours, and for a fault in the seal subsystem, it may be determined that a cost of about USD 80,000 may be incurred, and the time required to perform the maintenance action may be 72 hours, and the like.

Further, at block 706, the method 700 includes determining an impact of production slowdown on the facility. In one example, a cost associated with production slowdown may be determined for each fault associated with the equipment. For instance, a cost associated with decreasing the speed of the equipment to mitigate the severity of the fault may be determined.

At block 708, the method 700 includes computing an impact of production shut down on the facility. In one example, a cost associated with the production shutdown may be computed for each fault associated with the equipment.

In one example, the cost associated with each maintenance action and a cost associated with the impact of production of the product may be combined to determine the impact of production shut down on the facility. For example, the maintenance cost impact value may include the costs associated with a maintenance action performed on the lubrication sub-system, the bearing sub-system, and the seal sub-system, and the cost associated with the impact of production of the product may include a price of the product, the plant capacity, the start-up time and coast down time for each sub-system-and the like.

At block 710, the method 700 includes performing a break-even analysis between the impact of production slow down and production shut down. In one example, the break-even analysis may be performed based on the impact of production slow down and the impact of production shut down. In one example, the break-even analysis may be performed for each fault associated with the equipment and the break-even point may be included in the risk profile that is generated for the equipment. In one example, the risk profile may be similar to the risk profile as described with reference to Fig.3. The risk profile may include break-even analysis performed for each fault associated with various equipments across the facility allowing informed decision-making regarding maintenance timing and strategies, thereby enabling accurate risk assessment and management for improved overall facility efficiency and cost-effectiveness.

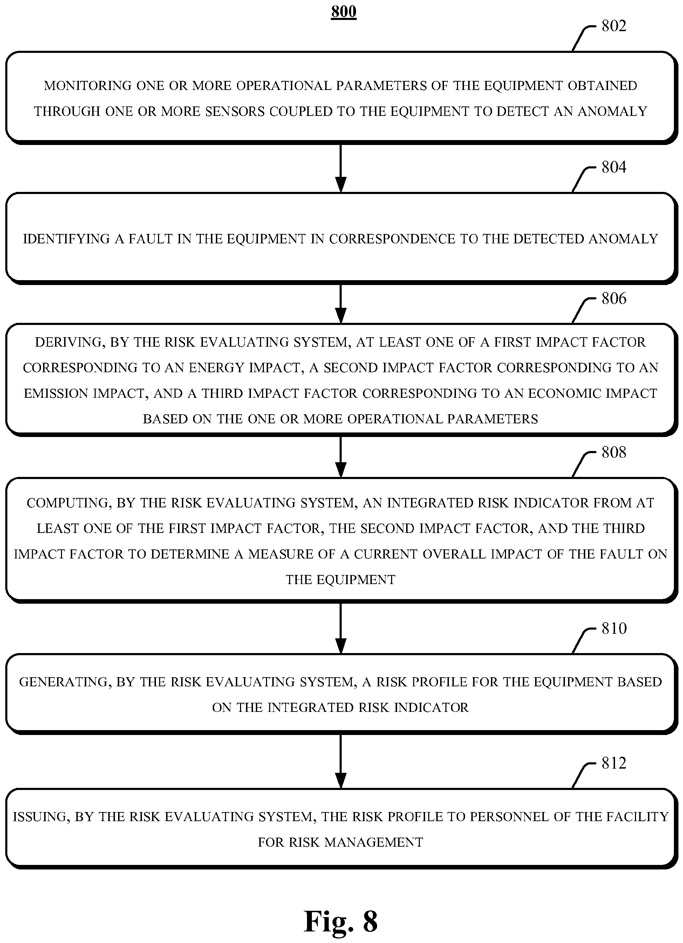

Fig. 8 illustrates an example method 800 to determine an overall impact of a fault on an equipment operating in the facility, in accordance with an example implementation of the present subject matter. The order in which the method 800 is described is not intended to be construed as a limitation, and any number of the described method blocks can be combined in any order to implement method 800 or an alternative method. Additionally, individual blocks may be deleted from the method 800 without departing from the spirit and scope of the subject matter described herein. Furthermore, the method 800 may be implemented in any suitable hardware, computer readable instructions, firmware, or combination thereof. For discussion, the method 800 is described with reference to the implementations illustrated in Fig(s). 1-7.

At block 802, the method 800 includes monitoring, by the risk evaluating system, one or more operational parameters of the equipment obtained through one or more sensors coupled to the equipment to detect an anomaly, wherein the anomaly indicates a deviation of an operational parameter from a first operating range corresponding to the operational parameter.

At block 804, the method 800 includes identifying, by the risk evaluating system, a fault in the equipment operating in the facility in correspondence to the detected anomaly

At block 806, the method 800 includes deriving, by the risk evaluating system, on identification of the fault, at least one of a first impact factor corresponding to an energy impact, a second impact factor corresponding to an emission impact, and a third impact factor corresponding to an economic impact. In one example, deriving the first impact factor, the second impact factor, and the third impact factor is based on at least one of the one or more operational parameters associated with the fault, historical data associated with fault, and a type of fault incident on the equipment.

At block 808, the method 800 includes computing, by the risk evaluating system, an integrated risk indicator from at least one of the first impact factor, the second impact factor, and the third impact factor to determine a measure of a current overall impact of the fault on the equipment. In one example, the integrated risk indicator may be computed based on data fusion techniques such as fuzzy logic, Dempster Shafer technique, Bayesian belief network. In one example, the integrated risk indicator from at least one of the first impact factor, the second impact factor, and the third impact factor, may be determined at pre-determined time intervals, for example, every 1 hour.

Further, in one example, the method includes determining the integrated risk indicator for one or more equipments operating in the facility and assigning a priority index to the one or more equipments operating in the facility in correspondence to a value of the integrated risk indicator determined for each equipment of the one or more equipments operating in the facility. In one example, the method includes determining one or more failure stages associated with the fault incident on the equipment and determining the integrated risk indicator for each failure stage, where each failure stage of the one or more failure stages is indicative of a cascading impact of the fault on the equipment and other equipments of the facility.

At block 810, the method 800 includes generating, by the risk evaluating system, a risk profile for the equipment based on the integrated risk indicator, where the risk profile includes one or more remedial strategies to be executed.

In one example, the method includes determining a first mitigative impact associated with a maintenance action performed on the equipment, a second mitigative impact associated with slowing down the equipment, where slowing down the equipment leads to a production slowdown of the facility, and a third mitigative impact associated with shutting down the equipment, where shutting down the equipment leads to a production shutdown of the facility. Each of these mitigative impacts may be included in the risk profile. Further, in one example, the method includes performing a break-even analysis by comparing at least one of the first mitigative impact, the second mitigative impact, and the third mitigative impact. In one example, the break-even analysis may also be included in the risk profile, where the break-even analysis may be performed for each failure stage amongst the one or more failure stages associated with the fault.

At block 812, the method 800 includes issuing, by the risk evaluating system, the risk profile to personnel of the facility for risk management.

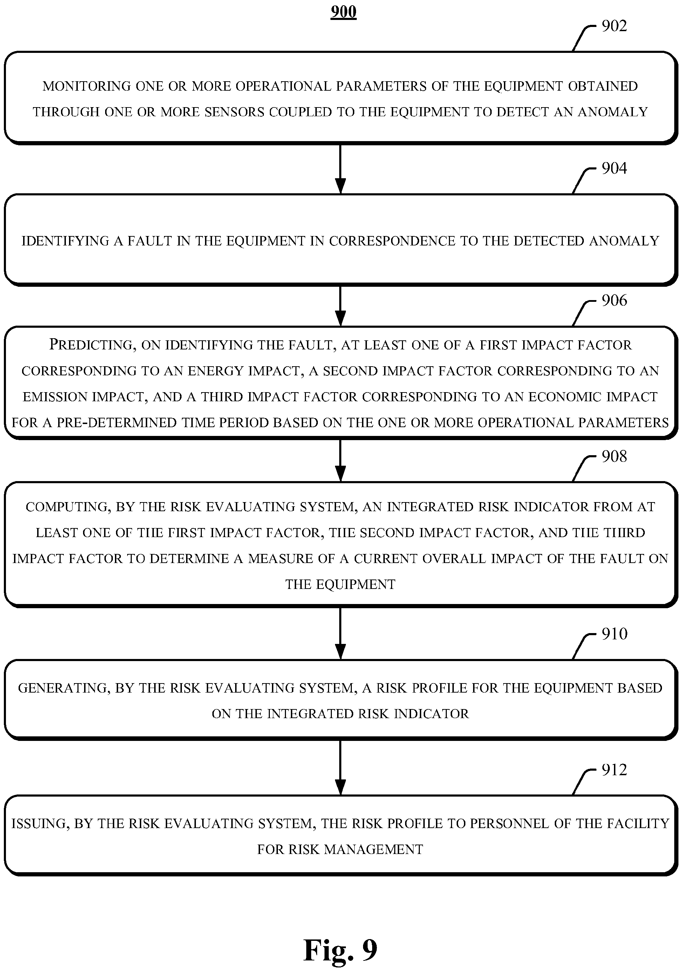

Fig. 9 illustrates another method 900 for determining an impact of a fault in an equipment operating in the facility, in accordance with an example implementation of the present subject matter. The order in which the method 900 is described is not intended to be construed as a limitation, and any number of the described method blocks can be combined in any order to implement method 900 or an alternative method. Additionally, individual blocks may be deleted from the method 900 without departing from the spirit and scope of the subject matter described herein. Furthermore, the method 900 may be implemented in any suitable hardware, computer readable instructions, firmware, or combination thereof. For discussion, the method 900 is described with reference to the implementations illustrated in Fig(s). 1-7.

At block 902, the method 900 includes monitoring one or more operational parameters of the equipment obtained through one or more sensors coupled to the equipment to detect an anomaly, where the anomaly indicates a deviation of an operational parameter from a first operating range corresponding to the operational parameter.

At block 904, the method 900 includes identifying a fault in the equipment operating in the facility in correspondence to the detected anomaly.

At block 906, the method 900 includes predicting, on identification of the fault, at least one of a first impact factor corresponding to an energy impact, a second impact factor corresponding to an emission impact, and a third impact factor corresponding to an economic impact for a pre-determined time period based on the one or more operational parameters of the equipment. In one example, a user may set the pre-determined time period for predicting the first impact factor, the second impact factor, and the third impact factor. In one example, the first impact factor, the second impact factor, and the third impact factor, may be predicted based on the operational parameters, the type of fault, and historical data. In one example, historical data may include fault patterns for similar faults that have occurred in the same equipment or similar equipment in the past, historical fault progression patterns, past operational parameters which resulted in faults, and the like. In one example, the integrated risk indicator from at least one of the first impact factor, the second impact factor, and the third impact factor, may be predicted at pre-determined time intervals, for example, every 1 hour.

Further, in one example, the method includes predicting the integrated risk indicator for one or more equipments operating in the facility and assigning a priority index to the one or more equipments operating in the facility in correspondence to a value of the integrated risk indicator predicted for each equipment of the one or more equipments operating in the facility. In one example, the method includes determining one or more failure stages associated with the fault incident on the equipment and determining the integrated risk indicator for each failure stage, where each failure stage of the one or more failure stages is indicative of a cascading impact of the fault on the equipment and other equipments of the facility.

At block 908, the method 900 includes computing an integrated risk indicator from at least one of the first impact factor, the second impact factor, and the third impact factor to determine a measure of an overall impact of the fault on the equipment for the pre-determined time period. In one example, the integrated risk indicator may be computed based on data fusion techniques such as fuzzy logic, Dempster Shafer technique, Bayesian belief network.

At block 910, the method 900 includes generating a risk profile for the equipment based on the integrated risk indicator, where the risk profile includes one or more remedial strategies to be executed.

In one example, the method includes determining based on the integrated risk indicator, a first mitigative impact associated with a maintenance action performed on the equipment, a second mitigative impact associated with slowing down the equipment, where slowing down the equipment leads to a production slowdown of the facility, and a third mitigative impact associated with shutting down the equipment, where shutting down the equipment leads to a production shutdown of the facility. Each of these mitigative impacts may be included in the risk profile. Further, in one example, the method includes performing a break-even analysis by comparing at least one of the first mitigative impact, the second mitigative impact, and the third mitigative impact. In one example, the break-even analysis may also be included in the risk profile, where the break-even analysis may be performed for each failure stage amongst the one or more failure stages associated with the fault.

At block 912, the method 900 includes issuing the risk profile to personnel of the facility for risk management.

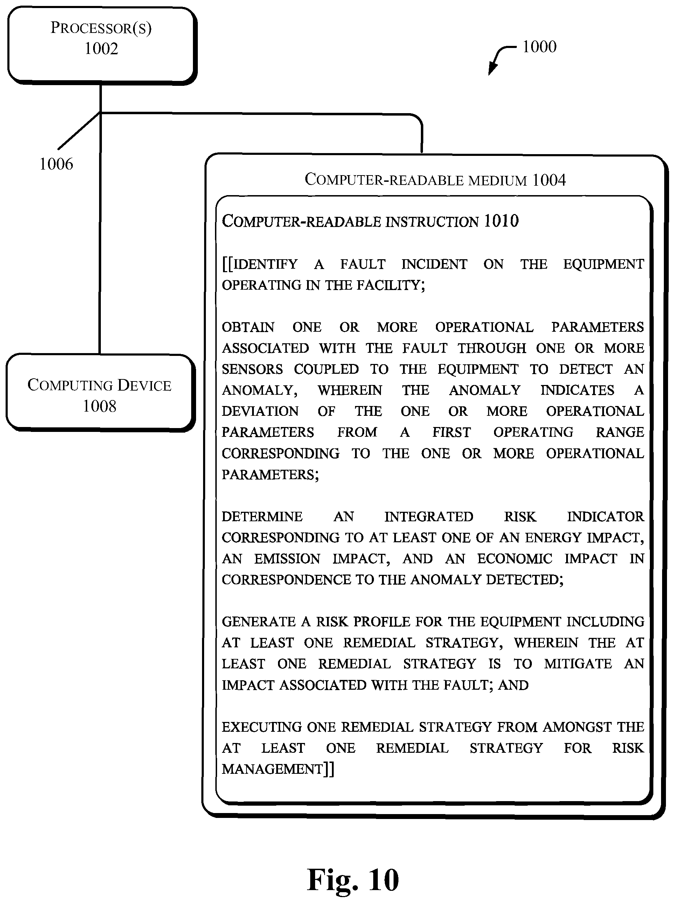

Fig. 10 illustrates a non-transitory computer-readable medium for determining an overall impact of a fault associated with an equipment operating in a facility, in accordance with an example of the present subject matter. In an example, the computing environment 1000 includes processor 1002 communicatively coupled to a non-transitory computer readable medium 1004 through communication link 1006. In an example implementation, the computing environment 1000 may be for example, the system 106 for risk evaluation. In an example, the processor 1002 may have one or more processing resources for fetching and executing computer-readable instructions from the non-transitory computer readable medium 1004. The processor 1002 and the non-transitory computer readable medium 1004 may be implemented, for example, in the system for risk management.

The non-transitory computer readable medium 1004 may be, for example, an internal memory device or an external memory. In an example implementation, the communication link 1006 may be a network communication link, or other communication links, such as a PCI (Peripheral component interconnect) Express, USB-C (Universal Serial Bus Type-C) interfaces, I2C (Inter-Integrated Circuit) interfaces, and the like. In an example implementation, the non-transitory computer readable medium 1004 includes a set of computer readable instructions 1010 which may be accessed by the processor 1002 through the communication link 1006 and subsequently executed for risk management. The processor(s) 1002 and the non-transitory computer readable medium 1004 may also be communicatively coupled to a computing device 1008 over the network.

Referring to Fig. 10, in an example, the non-transitory computer readable medium 1004 includes computer readable instructions 1010 that cause the processor 1002 to identify a fault incident on the equipment operating in the facility.

The instructions 1010 may further cause the processor 1002 to obtain one or more operational parameters associated with the fault through one or more sensors coupled to the equipment to detect an anomaly, wherein the anomaly indicates a deviation of the one or more operational parameters from a first operating range corresponding to the one or more operational parameters. Further, the instructions 1010 may cause the processor 1002 to determine an integrated risk indicator corresponding to at least one of an energy impact, an emission impact, and an economic impact in correspondence to the anomaly detected. In one example, the instructions 1010 may cause the processor 1002 to determine the integrated risk indicator-based data fusion techniques such as fuzzy logic, Dempster Shafer technique, Bayesian belief network.

The instructions 1010 may further cause the processor 1002 to generate a risk profile for the equipment including at least one remedial strategy, wherein the at least one remedial strategy is to mitigate an impact associated with the fault and execute one remedial strategy from amongst the at least one remedial strategy for risk management. In one example, the instructions 1010 may further cause the processor 1002 to determine the integrated risk indicator for one or more equipments operating in the facility and assign a priority index to the one or more equipments operating in the facility in correspondence to a value of the integrated risk indicator determined for each equipment of the one or more equipments operating in the facility.

Although examples of the present subject matter have been described in language specific to methods and/or structural features, it is to be understood that the present subject matter is not limited to the specific methods or features described. Rather, the methods and specific features are disclosed and explained as examples of the present subject matter.

## Claims

1. A method implemented by a risk evaluating system to determine an overall impact of a fault associated with an equipment operating in a facility, the method comprising:
monitoring one or more operational parameters of the equipment obtained through one or more sensors coupled to the equipment to detect an anomaly, wherein the anomaly indicates a deviation of an operational parameter from a first operating range corresponding to the operational parameter;
identifying, by the risk evaluating system, a fault in the equipment operating in the facility in correspondence to the detected anomaly;
deriving, by the risk evaluating system, on identification of the fault, at least one of a first impact factor corresponding to an energy impact, a second impact factor corresponding to an emission impact, and a third impact factor corresponding to an economic impact based on the one or more operational parameters of the equipment;
computing, by the risk evaluating system, an integrated risk indicator from at least one of the first impact factor, the second impact factor, and the third impact factor to determine a measure of a current overall impact of the fault on the equipment;
generating, by the risk evaluating system, a risk profile for the equipment based on the integrated risk indicator, wherein the risk profile includes one or more remedial strategies to be executed; and
issuing, by the risk evaluating system, the risk profile to personnel of the facility for risk management.

2. The method of claim 1 wherein deriving at least one of the first impact factor, the second impact factor, and the third impact factor is based on at least one of the one or more operational parameters associated with the fault, historical data associated with fault, and a type of fault incident on the equipment.

3. The method of claim 1 wherein determining the integrated risk indicator from at least one of the first impact factor, the second impact factor, and the third impact factor, is performed at pre-determined time intervals.

4. The method of claim 1 further comprising
determining, by the risk evaluating system, the integrated risk indicator for one or more equipments operating in the facility; and
assigning, by the risk evaluating system, a priority index to the one or more equipments operating in the facility in correspondence to a value of the integrated risk indicator determined for each equipment of the one or more equipments operating in the facility.

5. The method of claim 1 further comprising determining, by the risk evaluating system, one or more failure stages associated with the fault incident on the equipment, wherein each failure stage of the one or more failure stages is indicative of a cascading impact of the fault on the equipment and other equipments of the facility.

6. The method of claim 5 further comprising predicting, by the risk evaluating system, at least one of the first impact factor, the second impact factor, and the third impact factor for each failure stage amongst the one or more failure stages associated with the fault incident on the equipment.

7. The method of claim 1 wherein deriving at least one of the first impact factor, the second impact factor, and the third impact factor is based on a data fusion technique.

8. The method of claim 1 further comprising determining, by the risk evaluating system,
a first mitigative impact associated with a maintenance action performed on the equipment;
a second mitigative impact associated with slowing down the equipment, wherein slowing down the equipment leads to a production slowdown of the facility; and
a third mitigative impact associated with shutting down the equipment, wherein shutting down the equipment leads to a production shutdown of the facility.

9. The method of claim 8 further comprising performing, by the risk evaluating system, a break-even analysis by comparing at least one of the first mitigative impact, the second mitigative impact, and the third mitigative impact.

10. The method of claim 9, further comprises
determining, by the risk evaluating system, one or more failure stages associated with the fault incident on the equipment, wherein each failure stage of the one or more failure stages is indicative of a cascading impact of the fault on the equipment and other equipments of the facility; and
wherein the break-even analysis is performed for each failure stage amongst the one or more failure stages associated with the fault.

11. A system to determine an overall impact of a fault associated with an equipment operating in a facility, the system comprising:
an assessment module configured to:
monitor one or more operational parameters of an equipment obtained through one or more sensors coupled to the equipment to detect an anomaly, wherein the anomaly indicates a deviation of an operational parameter from a first operating range corresponding to the operational parameter;
identify a fault in the equipment operating in the facility in correspondence to the detected anomaly; and
a risk evaluating module configured to:
predict, on identification of the fault, at least one of a first impact factor corresponding to an energy impact, a second impact factor corresponding to an emission impact, and a third impact factor corresponding to an energy impact for a pre-determined time period based on the one or more operational parameters of the equipment;
compute an integrated risk indicator from at least one of the first impact factor, the second impact factor, and the third impact factor to determine a measure of an overall impact of the fault on the equipment for the pre-determined time period;
generate a risk profile for the equipment based on the integrated risk indicator, wherein the risk profile includes one or more remedial strategies to be executed; and
issue the risk profile to personnel of the facility for risk management.

12. The system of claim 11 wherein predicting the first impact factor, the second impact factor, and the third impact factor is based on at least one of the one or more operational parameters associated with the fault, a type of fault incident on the equipment, and historical data associated with the fault.

13. A non-transitory computer-readable medium comprising instructions for determining an overall impact of a fault associated with an equipment operating in a facility, the instructions being executable by a processor to:
monitor one or more operational parameters of the equipment obtained through one or more sensors coupled to the equipment to detect an anomaly, wherein the anomaly indicates a deviation of an operational parameter from a first operating range corresponding to the operational parameter;
identify a fault in the equipment in correspondence to the detected anomaly;
determine, on identifying the fault, an integrated risk indicator corresponding to at least one of an economic impact, an energy impact, and an emission impact based on the one or more operational parameters of the equipment;
generate a risk profile for the equipment including at least one remedial strategy based on the integrated risk indicator, wherein the at least one remedial strategy is to mitigate an impact associated with the fault; and
execute one remedial strategy from amongst the at least one remedial strategy for risk management.

14. The non-transitory computer-readable medium as claimed in claim 18, wherein the instructions being executable by a processor are to determine the integrated risk indicator based on a data fusion technique.

15. The non-transitory computer-readable medium as claimed in claim 18, wherein the instructions being executable by a processor are to
determine the integrated risk indicator for one or more equipments operating in the facility; and
assign a priority index to the one or more equipments operating in the facility in correspondence to a value of the integrated risk indicator determined for each equipment of the one or more equipments operating in the facility.
